**Europäisches Patentamt**

**European Patent Office**

**Office européen des brevets**

(19)

(11) Veröffentlichungsnummer: **0 264 540 B1**

(12) **EUROPÄISCHE PATENTSCHRIFT**

(45) Veröffentlichungstag der Patentschrift:
27.12.90

(51) Int. Cl.⁵: **C04B 28/26, E04C 5/01**

(21) Anmeldenummer: **87108337.4**

(22) Anmeldetag: **10.06.87**

(54) **Verfahren zur Verhinderung der Korrosion von Stahlkonstruktionen oder Stahlarmierungen von Bauwerken.**

(30) Priorität: **16.10.86 DE 3635254**

(43) Veröffentlichungstag der Anmeldung:
**27.04.88 Patentblatt 88/17**

(45) Bekanntmachung des Hinweises auf die Patenterteilung:
**27.12.90 Patentblatt 90/52**

(84) Benannte Vertragsstaaten:
**AT BE CH DE ES FR GB IT LI LU NL SE**

(56) Entgegenhaltungen:
**DE-B-1 022 373**
**FR-A-1 079 484**
**FR-A-2 370 839**

**CHEMICAL ABSTRACTS, Band 90, Nr. 14, 2. April 1979,
Seite 306, Zusammenfassung Nr. 108732n, Columbus,
Ohio, US; & CS-A-175 741 (V. VACLAV et al.) 15-12-1978
Ullmanns Encyklopädie der technischen Chemie, 4.
Aufl., Band 21, Seite 411**

(73) Patentinhaber: **Jaklin, Hans, Aacher Weg 15 Erlenhof,
D-5500 Trier(DE)**

(72) Erfinder: **Jaklin, Hans, Aacher Weg 15 Erlenhof,
D-5500 Trier(DE)**

(74) Vertreter: **Eggert, Hans-Gunther, Dr.,
Räderscheidtstrasse 1, D-5000 Köln 41(DE)**

## Beschreibung

In Konstruktionen aus Stahlbeton hat der Beton zwei Funktionen zu erfüllen. Er muß die Druckspannungen aufnehmen und den Stahl vor Korrosion schützen. Der Armierungsstahl hat die Aufgabe, die Schub- und Zugspannung aufzunehmen.

Die Schutzwirkung des Zementsteins für das Eisen und ihre Dauer sind von mehreren Faktoren abhängig. Einerseits sind es die Klima- und Umweltbedingungen und andererseits ist es die Betonqualität, die primär durch die Zementanteile, die Körnung der Betonzuschläge, den Wasser/Zement-Faktor und die Betonverdichtung bestimmt wird.

Die Schutzwirkung des Betons für das Eisen ist durch die hohe Alkalität des durch Hydrolyse entstandenen $Ca(OH)_2$ - pH ca. 13 - bedingt. Die Kohlensäure, die sich aus dem Kohlendioxid der Luft mit Wasser bildet, reagiert mit den Calciumionen der Calciumsilikathydrat- oder Calciumaluminathydratphasen des Zementsteins unter Bildung von Calciumcarbonat. Der Beton carbonatisiert, wie dieser Vorgang allgemein genannt wird, bei einer Betonfeuchte die sich bei einer relativen Luftfeuchte von unter etwa 60 % einstellt. Sind die Betonporen praktisch vollständig mit Wasser gefüllt, kommt die Carbonatisierung zum Stillstand. Wie schnell und wie tief die Carbonatisierung im Beton vordringt, hängt von der Betonfeuchte und seinem Gefüge ab. Bei vollständiger Carbonatisierung fällt der pH-Wert des Betons auf ca. 8 ab. Die Eisenkorrosion braucht trotzdem nicht einzusetzen, wenn wie in Innenräumen der Beton trocken ist. Betonfeuchten, die sich bei relativen Luftfeuchten von 80 - 100 % einstellen, führen zur Rostbildung am Armierungseisen, sobald der pH-Wert der umgebenden Porenflüssigkeit unter 9,5 fällt. Die Korrosion wird durch Salze (Streu- und Tausalze), die mit dem Wasser eindringen, erheblich verstärkt. Insbesondere kommt es durch Chloridionen zu dem befürchteten Lochfraß am Eisen, der die Tragfähigkeit der Konstruktion herabsetzt. Aber auch die ganzflächige Rostung des Eisens, die anfänglich nur zu einem unbedeutenden Festigkeitsverlust des Bauteils führt, verursacht schon große Folgeschäden. Die Aufnahme von Sauerstoff und Hydratwasser erhöht das Gewicht des Korrosionsprodukts, $Fe_2O_3 \times H_2O$, bezogen auf den korrodierten Eisenanteil je nach Menge des aufgenommenen Hydratwassers. In Abhängigkeit von der Menge des aufgenommenen Hydratwassers und der eingelagerten Salze können die Korrosionsprodukte des Stahls das vier- bis achtfache des ursprünglichen Volumens einnehmen. Durch die Volumenvermehrung platzen zunächst die Oberflächenschichten ab. Später bilden sich Risse aus, die das ganze Bauwerk durchziehen.

Ähnliches gilt für Stahlkonstruktionen, die mit künstlichen Kalksandsteinen, Betonsteinen, Naturstein oder Ziegeln verblendet sind. Hier kommt schadensfördernd die Rißbildung im Verbund von Fugenmörtel und Stein hinzu, die durch das unterschiedliche Verhalten der Materialien bei Temperaturschwankungen verursacht wird. Während beim Stahlbeton nach sachgemäßer Ausführung vorwiegend nur die Oberfläche und die oberflächennahen Schichten Risse aufweisen, verlaufen bei diesem Bauwerkstyp die Risse durch die ganze Mauerstärke bis zur Trägerkonstruktion. Das Regenwasser, in dem immer Sauerstoff gelöst ist, kann praktisch ungehindert bis zum Eisen vordringen. Korrosionsfördernd wirken zusätzlich Salze, die auf dem Weg von der Außenschicht durch die Mörtel- und Gesteinsrisse vom Regenwasser gelöst und transportiert werden.

Es hat nicht an Versuchen gefehlt, die Stahlteile für die Konstruktion oder die Bewehrung spätestens vor dem Aufbringen des Verblendmaterials oder dem Eingießen des Frischbetons mit einem Korrosionsschutz zu versehen. Das geschieht u.a. mit anorganischen Salzen, insbesondere Nitriten und Chromaten, die die Oberfläche des Stahlmaterials oxidieren und hier eine dichte Metalloxidschutzschicht bilden.

Kathodische Korrosionshemmer aus der Gruppe der Carbonate, Phosphate und Polyphosphate bilden mit anderen unter korrosiven Bedingungen vorhandenen Ionen eine Schutzschicht aus schwerwasserlöslichen Salzen auf der Oberfläche des Stahlmaterials und hemmen dadurch die Korrosion (DE-OS 35 13 566). Korrosionsschutzbeschichtungen im allgemeinen, also ohne Rücksicht auf eine feste Verbindung zwischen der Stahlkonstruktion bzw. Armierung und dem umgebenden silikatischen Material, enthalten hauptsächlich Pigmente, wie Mennige, Blei, Silicochromat, Zinkstaub, Bleipulver und verschiedene Phosphate und Phosphite. Diese Rostschutzsysteme sind arbeitshygienisch nicht unbedenklich (K.-D. Ledwoch, Metalloberfläche 40, (1986), S.57-59). Einen festen Verbund zwischen Eisen und dem Beton oder Mörtel können sie auch nicht herstellen, weil der mit diesen Systemen beschichtete Stahl von dem Mörtel oder Frischbeton nicht ausreichend benetzt wird.

Bekannt ist ferner ein Korrosionsschutzverfahren für die Stahlarmierung in Beton, bei dem beim Eingießen des Frischbetons Adipin- oder Abietinsäure als Versiegelungsmittel in einer Menge von 1,5 %, bezogen auf den Zementanteil, zugesetzt werden und die Stahleinlagen dann durch Anlegen von Strom anodisch geschützt werden (C.A. 104 : 134017k).

Der Erfindung liegt die Aufgabe zugrunde, die Korrosion von Stahlkonstruktionen oder Stahlarmierungen zu verhindern bzw. die Korrosionsbeständigkeit wesentlich zu verbessern. Das geschieht erfindungsgemäß, indem die fertige Stahlkonstruktion oder verlegte Bewehrung mit der Lösung eines modifizierten Alkalisilikats mit einem $Me_2O : SiO_2$-Verhältnis von 1 : 2 bis 1 : 3 behandelt wird. Vorzugsweise enthält die Alkalisilikatlösung metastabilgelöste oder suspendierte Kieselsäure mit einem $Me_2O : SiO_2$-Gewichtsverhältnis von 1 : 3 bis 1 : 12.

Me bedeutet in den obigen allgemeinen Formeln $Me_2O$ für den Alkalioxidanteil Lithium, Natrium oder Kalium, wobei letzteres im Gemisch mit Natrium bevorzugt wird. Ein Vol.-Teil des Alkalisilikats wird in der Regel mit 0,5 bis 2 Volumenteilen Wasser verdünnt. Das entspricht einer $SiO_2$-Konzentration in der Lösung von etwa 7 bis 20 Gewichtsprozent.

Das zugesetzte Kieselsäurexerogel hat zweckmäßigerweise eine Oberfläche nach BET von 25 bis 800 $m^2/g$, insbesondere 100 bis 600 $m^2/g$. Ein erfindungsgemäß zugesetztes Hydrogel enthält zweckmäßig 33 bis 66% $SiO_2$ und die Oberfläche nach BET liegt zwischen 250 und 800 $m^2/g$. Sowohl das Xerogel als auch das Hydrogel werden zweckmäßig so fein vermahlen, daß 98 bis 99% der Teilchen kleiner als $40\mu m$ sind. Das erfindungsgemäß zur Erhöhung des $Me_2O : SiO_2$-Verhältnisses auf 1 : 3 bis 1 : 12, vorzugsweise 1 : 3 bis 1 : 10 eingesetzte Kieselsäurehydrosol hat zweckmäßigerweise eine BET-Oberfläche bis zu 200 $m^2/g$ und einen pH-Wert über 8. Die fertige Suspension hat einen pH-Wert von 10, vorzugsweise von 11,0 bis 12,1.

Die vorstehend und im folgenden verwendete BET-Methode zur Oberflächenbestimmung durch Berechnung der Monoschichtkapazität ist von Brunauer, Emmet und Teller u.a. in Ullmans Enzyklopädie der technischen Chemie, Band II/1, Seite 158/59 beschrieben.

Bei einer bevorzugten Ausführungsform der Erfindung wird die mit dem oben bezeichneten Alkalisilikat behandelte verlegte Stahlkonstruktion oder Stahlbewehrung mit Mörtel oder Frischbeton umhüllt oder vergossen, der bezogen auf den Zementanteil 2 bis 6 Gew.% einer feinteiligen amorphen Kieselsäure mit mindestens 90 Gew.% $SiO_2$ oder feinteilige aktive gefällte Silikate des Magnesiums, Calciums, Bariums oder Aluminiums enthält. Diese Kieselsäuren oder Silikate haben eine BET- Oberfläche von 50 bis 200 $m^2/g$ und bei der Kornanalyse nach Cilas einen $d_{50\%}$-Wert unter 20 μm. Zur Kornanalyse wird ein Gerät der Firma Cilas verwendet, das nach der Laserstrahlmethode arbeitet. Diese Methode wird von J. Swithenbank et al in "Experimental diagnostics in gas phase c ombustion systems, Progress in Astronautics and Aeronautics, Vol. 53, (1977)" beschrieben.

Von den dem Mörtel zugesetzten feinteiligen Silikaten werden Bariumsilikat der Zusammensetzung 40 % BaO, 52 % $SiO_2$ 8 % Glühverlust oder ein Natriumaluminiumsilikat der Zusammensetzung 73 % $SiO_2$, 7 % $Al_2O_3$, 7 % $Na_2O$ und 12 % Glühverlust bevorzugt.

Die Inhibierung der Korrosion von Stahl durch die erfindungsgemäßen modifizierten Alkalisilikate wird anhand der folgenden Beispiele dargestellt.

Die Korrosionsversuche wurden unter genau definierten und kontrollierbaren Bedingungen über einen langen Zeitraum durchgeführt, wobei die mit der modifizierten Alkalisilikatlösung behandelten Stahlproben mit nicht beschichteten Mustern verglichen wurden.

Beispiel 1

Versuchsbeschreibung

Die Versuche wurden mit Rundstäben aus Baustahl von ca. 15 cm Länge und 11 mm Durchmesser folgender Analyse durchgeführt:
C 0,17 %, Mn 0,70 %, Si 0,30 %. Der Rest ist fast ausschließlich Eisen bis auf maximal eventuell 0,03 % S und 0,03 % P.

Um den Einfluss des Oberflächenzustandes mit in Betracht ziehen zu können, wurden folgende Proben genommen:
(a bis c ohne und mit Alkalisilikat beschichtet vor der Zementummantelung)

- a) üblicher Walzzunder
- b) üblicher Walzzunder, jedoch angerostet durch Aussetzen in Freibewitterung
- c) Sandgestrahlt zwecks Vergleich der obigen Muster mit reinem Stahl
- d) ohne Beschichtung mit Alkalisilikat aber mit Zement ummantelt.

Aus handelsüblichem Portlandzement folgender Analyse ($SiO_2$ 21 %, CaO 64 %, MgO 1,2 %, $R_2O$ 9 %) wurde eine Schlämme hergestellt, mit welcher die mit Alkalisilikat vorbehandelten Rundstäbe durch kurzes Eintauchen beschichtet wurden. Es ergab sich eine konzentrische Zementschicht von ca. 1 mm Wandstärke. Es wurde sowohl üblicher als auch mit 5 % NaCl versetzter Zement für die Ummantelung benutzt.

Die Stahlstäbe wurden vor der Zementbeschichtung mit der Alkalisilikatlösung durch kurzes Eintauchen und Antrocknen bei Raumtemperatur beschichtet. Die verwendete Alkalisilikatlösung hatte die folgende Zusammensetzung:
$SiO_2$ 19,14 %
$Na_2O$ 7,54 %
$CrO_4^{-2}$ 0,31 %
$CO_2$ 0,7 %
Ethanol 0,92 %
Der Rest zu 100 % bestand aus Wasser.
Gewichtsverhältnis $SiO_2 : Na_2O$ - 2,54 : 1

Dichte 1,251
Viskosität 10,1 cP
Oberflächenspannung 54 dyn/cm
pH-Wert 11,4

Auf diese Weise konnten reelle Bedingungen leicht simuliert werden: Setzt man eine solche Probe der Bewitterung aus, entstehen durch differentielle thermische Ausdehnungen Risse im Zement durch welche Wasser bis zum Stahl durchdringen und - falls keine Inhibitoren vorhanden sind - zusammen mit dem immer vorhandenen Sauerstoff Rost bilden kann, durch welchen die Zementschicht abgesprengt und der Schaden vergrößert wird.

Da aus langjähriger Erfahrung bekannt war, daß sich Korrosionserscheinungen durch eine auf 40°C erhöhte Umgebungstemperatur beschleunigen lassen, ohne qualitative Veränderungen des Reaktionsverlaufs, wurden die ummantelten und vorbehandelten Proben in eine Feuchtigkeitskammer mit 100 % Luftfeuchtigkeit (Kondensation) und einer Temperatur von 40°C während 10 Monaten ausgesetzt. Periodisch wurde die Temperatur kurzfristig gesenkt, um die vorher erwähnte differentielle Ausdehnung zu ermöglichen, die zur Rissbildung führt.

Zusammen mit den vorbehandelten Proben wurden nicht vorbehandelte, ummantelte Proben getestet, um einen klaren Vergleich zu ermöglichen.

Nach Ablauf von 10 Monaten wurde die Zementummantelung der Probestäbe abgeschlagen, um die Metalloberfläche freizulegen.

Die vom Zement befreiten Proben wurden visuell geprüft und miteinander verglichen.

Der rein visuelle Vergleich ergab, daß in jedem Fall das nicht vorbehandelte Vergleichsmuster ungleich stärker angerostet war als die mit Alkalisilikat vorbehandelten Stäbe. Bei den beschichteten sandgestrahlten Mustern ist die ursprüngliche blanke Metallfarbe zum großen Teil sogar noch nach 10 Monaten Lagerung im Klimaschrank erhalten geblieben.

Ferner wurde festgestellt, daß die Haftung des Zements an den mit der Alkalisilikatlösung behandelten Stahlstäben besser als auf dem unbehandelten Muster war.

Der festanhaftende Normalzement auf den beschichteten Proben war schwierig und nicht vollständig ohne Metallabschabung zu entfernen.

Es ist hervorzuheben, daß diese Inhibierung nur auf die Beschichtung mit der oben bezeichneten Alkalisilikatlösung zurückzuführen ist, da die Karbonatisierung nach 10 Monaten Lagerung die Wandstärke von 1 mm durchschritten hatte und die Passivierung durch die Zementalkalität daher nicht mehr wirksam sein konnte.

Beispiel 2

Es wurden Betonwürfel, 20 x 20 cm, mit Eisenbewehrung hergestellt. Der Grundzustand des Armierungsstahls war identisch mit b) der Labormuster: üblicher Walzzunder nach Anrostung durch Lagerung im Freien. Die Beschichtung vor dem Einbetonieren erfolgte in gleicher Form wie für die entsprechenden Labormuster. In die Betonmischungen A und B wurde der vorbehandelte Stahl eingebettet.

| Zusammensetzung der Betonmischungen | | |
|---|---|---|
| | A Mengen in kg | B |
| Zement | 307 | wie A |
| Wasser | 156 | wie A |
| Zuschlag, 12 mm | 1045 | wie A |
| Zuschlag 5 mm | 418 | wie A |
| Sand | 627 | wie A |
| NaCl | 29 | wie A |
| Kieselsäure nach Anspruch 3 | 9,22 kg = 3 % bezogen auf Zement | ohne Zusatz von aktiver Kieselsäure |
| handelsüblicher Verflüssiger | 1,7 Liter | 1,7 Liter |

Ergebnisse

Wie bei den Laborproben ergab sich eine sehr gute Haftung des Betons auf dem Eisen sowie eine ausgeprägte Inhibierung. Die Bildung von Rostansätzen war trotz der Lagerung der Proben im bzw. am Persischen Golf minimal.

Beispiel 3 QUANTITATIVE KURZZEITVERSUCHE

Um den Einfluss der Silikatinhibitoren auf die Rostbildung quantitativ zu erfassen, wurden vorbehandelte (und zum Vergleich: nicht vorbehandelte) Proben sowohl in destilliertes Wasser wie auch in 5 % NaCl-haltiges, gut belüftetes Wasser während 40 Tagen bei Raumtemperatur ausgesetzt. In diesem Falle waren die Proben nicht mit Zement ummantelt.

Auf den mit Silicat-Inhibitoren vorbehandelten Proben entwickelte sich ein sehr dunkler, fast schwarzer Belag, wohingegen bei dem Vergleichsmuster sich der übliche rötliche Rost einstellte.

Die Gewichtsverluste schwankten von Probe zu Probe, die Mittelwerte zeigten aber deutlich einen höheren Gewichtsverlust durch Rosten bei den nicht vorbehandelten Proben.

Die Identifizierung der Rostschichtkomponenten bzw. der inhibierenden Schutzschichten erfolgte durch Mössbauerspektroskopie.

Die Mössbauerspektroskopie erlaubt eine sehr gute Identifizierung von Oxiden des Eisens. Sie wurde daher eingesetzt, um die Zusammensetzung der mit Natriumsilikatinhibitoren behandelten Betonstahloberflächen im Detail aufzuklären.

Es wurden die in den Beispielen 2 und 3 beschriebenen Stahlproben aus dem Arabischen Golf (2) und die Stäbe aus den Kurzzeitversuchen (3) untersucht.

Die Auswertung der Ergebnisse der Mössbauerspektroskopie zeigt, daß die Eisenoxidschichten teils aus Magnetit, teils aus Goethit bestehen.

Es ist überraschend, daß die modifizierten Alkalisilikate auch auf rostigem Stahl ($Fe_2O_3 \cdot x\ H_2O$) bei Raumtemperatur diesen korrosionshemmenden Schutz aus festhaftendem Magnetit und Goethit zu bilden imstande sind. Dadurch wird das weitere Vordringen der Korrosion stark gehemmt.

Sowohl Langzeitversuche im Labor über 10 Monate wie auch Meeresfreibewitterung über 1 Jahr von zementummanteltem Betoneisen haben erwiesen, daß im Falle einer Vorbehandlung des Stahles durch die modifizierten Alkalisilikate das Rosten beträchtlich inhibiert wird und zwar durch die Ausbildung einer korrosionshemmenden Magnetit- und Goethit-Schicht, wodurch die Lebensdauer des Verbundes Eisen-Beton wesentlich verlängert werden kann.

**Patentansprüche**

1. Verfahren zur Verhinderung der Korrosion von Stahlkonstruktionen oder Stahlarmierungen von Bauwerken, dadurch gekennzeichnet, daß die fertige Stahlkonstruktion oder verlegte Bewehrung mit der Lösung eines Alkalisilikats mit einem $Me_2O:SiO_2$-Verhältnis von 1:2 bis 1:3 behandelt wird.

2. Verfahren nach Anspruch 1, dadurch gekennzeichnet, daß die Alkalisilikatlösung durch den Zusatz von Kieselsäurexerogel oder -hydrogel meta-stabil gelöste oder suspendierte Kieselsäure enthält, und ihr $Me_2O:SiO_2$-Verhältnis auf 1:3 bis 1:12 gebracht wurde.

3. Verfahren nach einem der Ansprüche 1 bis 2, dadurch gekennzeichnet, daß die mit der Alkalisilikatlösung nach Anspruch 1 oder 2 behandelte Stahlbewehrung oder die fertige Stahlkonstruktion mit einem Mörtel beschichtet wird, der 2 bis 6 Gew.%, bezogen auf den Zementanteil, einer feinteiligen amorphen Kieselsäure mit mindestens 90 Gew.% $SiO_2$ oder feinteilige aktive gefällte Silikate des Magnesiums, Calciums, Bariums oder Aluminiums mit einer BET-Oberfläche von 50 bis 200 $m^2/g$ und einem $d_{50\%}$-Wert unter 20 µm enthält.

**Revendications**

1. Procédé pour protéger de la corrosion des constructions en acier ou des armatures en acier d'ouvrages de construction, caractérisé en ce que la construction en acier au stade final ou l'armature posée est traitée avec une solution d'un silicate alcalin ayant un rapport $Me_2O:SiO_2$ de 1:2 à 1:3.

2. Procédé suivant la revendication 1, caractérisé en ce que la solution de silicate alcalin contient de l'acide silicique mis en solution ou en suspension métastable par addition de xérogel ou d'hydrogel d'acide silicique, et son rapport $Me_2O:SiO_2$ a été porté à une valeur de 1:3 à 1:12.

3. Procédé suivant l'une des revendications 1 et 2, caractérisé en ce que l'armature d'acier traitée avec la solution de silicate alcalin suivant la revendication 1 ou 2 ou la construction d'acier au stade final est revêtue d'un mortier qui contient 2 à 6% en poids, par rapport à la proportion de ciment, d'un acide silicique amorphe finement divisé contenant au moins 90% en poids de $SiO_2$ ou de fines particules de silicates de magnésium, calcium, baryum ou aluminium actifs précipités ayant une surface spécifique BET de 50 à 200 $m^2/g$ et une valeur $d_{50\%}$ inférieure à 20 µm.

**Claims**

1. Process for preventing the corrosion of steel constructions or steel reinforcements of buildings, characterised in that the finished steel construction or laid reinforcement is treated with the solution of an alkali silicate having an $Me_2O:SiO_2$ ratio of 1:2 to 1:3.

2. Process according to Claim 1, characterised in that the alkali silicate solution contains meta-stable dissolved or suspended silicic acid due to the addition of silicic acid xerogel or hydrogel, and its $Me_2O:SiO_2$ ratio has been brought to 1:3 to 1:12.

3. Process according to one of Claims 1 to 2, characterised in that the steel reinforcement treated with the alkali silicate solution according to Claim 1 or 2 or the finished steel construction is coated with a mortar which contains 2 to 6% by weight, relative to the cement content, of a finely-divided amorphous silicic acid having at least 90% by weight $SiO_2$ or finely-divided active precipitated silicates of magnesium, calcium, barium or aluminium having a BET surface area of 50 to 200 $m^2/g$ and a $d_{50\%}$ value of below 20 $\mu m$.